# EUROPÄISCHE PATENTSCHRIFT

(11) **EP 4 355 630 B1**
(45) Veröffentlichungstag und Bekanntmachung des Hinweises auf die Patenterteilung: **02.07.2025**
(21) Anmeldenummer: 22730103.3
(22) Anmeldetag: 17.05.2022
(51) Int. Cl.: B60W 60/00, B60W 50/02, B60W 50/029, G05D 1/00, B60W 50/023, B60W 50/04

(54) **VERFAHREN ZUM BETRIEB EINES FÜR EINEN AUTOMATISIERTEN FAHRBETRIEB EINGERICHTETEN FAHRZEUGS**
METHOD FOR OPERATING A VEHICLE DESIGNED FOR AUTOMATED DRIVING OPERATION
PROCÉDÉ DE FONCTIONNEMENT D'UN VÉHICULE CONÇU POUR UN FONCTIONNEMENT DE CONDUITE AUTOMATISÉE

(30) Priorität: 18.06.2021 DE 102021003154
(43) Veröffentlichungstag der Anmeldung: 24.04.2024
(73) Patentinhaber: Mercedes-Benz Group AG, 70372 Stuttgart (DE)
(72) Erfinder: OLTMANN, Volker, 75365 Calw (DE); RAAB, Markus, 74912 Kirchhardt (DE)
(74) Vertreter: Novagraaf Group
(86) Internationale Anmeldenummer: PCT/EP2022/063251
(87) Internationale Veröffentlichungsnummer: WO 2022/263080

(56) Entgegenhaltungen:
- WO-A1-2020/075477
- DE-A1- 102013 213 171
- US-A1- 2017 248 951
- US-A1- 2021 387 632

## Beschreibung

Die Erfindung betrifft ein Verfahren zum Betrieb für einen automatisierten Fahrbetrieb eingerichteten Fahrzeuges gemäß dem Oberbegriff des Patentanspruchs 1.

Die DE 10 2015 003 124 A1 beschreibt ein Verfahren zum Betreiben eines Fahrzeuges in einem automatisierten Fahrbetrieb. Während einer Normalfunktion des automatisierten Fahrbetriebes wird fortlaufend eine Notbetriebssolltrajektorie ermittelt und gespeichert, die nach Eintritt zumindest eines Fehlerereignisses einer automatisierten Trajektorienregelung des Fahrzeuges zugrunde gelegt werden soll. Bei einer erfolgten Detektion des Eintrittes des zumindest einen Fehlerereignisses wird ein Notfallbetriebsmodus aktiviert, in dem die automatisierte Trajektorienregelung des Fahrzeuges eingeleitet und gemäß der vor dem Eintritt des zumindest einen vorgegebenen Fehlerereignisses gespeicherte Notbetriebssolltrajektorie für eine vorgegebene Zeitdauer und/oder bis zum Stillstand des Fahrzeuges durchgeführt wird, falls und solange keine Fahrzeugführungsübernahme durch einen Fahrzeugführer des Fahrzeuges erfolgt.

Darüber hinaus sind aus der DE 10 2017 011 808 A1 ein Verfahren zur Regelung der Bewegung eines Fahrzeuges in einem automatisierten Fahrbetrieb und eine Vorrichtung zur Durchführung des Verfahrens bekannt. Das Verfahren sieht vor, dass der automatisierte Fahrbetrieb von einem regulären Betriebsmodus, in dem das Fahrzeug automatisiert zu einer vorgegebenen Zielposition geführt wird, zu einem Notbetriebsmodus, in dem das Fahrzeug automatisiert zu einer Nothalteposition geführt wird, umschaltbar ist. Die Regelung im regulären Betriebsmodus wird mittels eines Hauptsteuergerätes und im Notbetriebsmodus mittels eines Nebensteuergerätes durchgeführt. Dabei wird der automatisierte Fahrbetrieb vom regulären Betriebsmodus zum Notbetriebsmodus umgeschaltet, wenn im regulären Betriebsmodus eine Funktionsbeeinträchtigung des Hauptsteuergerätes festgestellt wird. Die Regelung im regulären Betriebsmodus wird basierend auf einer zur Zielposition führenden regulären Solltrajektorie durchgeführt, welche vom Hauptsteuergerät im regulären Betriebsmodus fortlaufend ermittelt wird. Die Regelung im Notbetriebsmodus wird basierend auf einer im Nebensteuergerät gespeicherten und zur Nothalteposition führenden Notbetriebs-Solltrajektorie durchgeführt, welche vom Hauptsteuergerät im regulären Betriebsmodus vor der Umschaltung des Betriebsmodus in den Notbetriebsmodus ermittelt worden ist und dem Nebensteuergerät zur Speicherung zugeführt worden ist. Im regulären Betriebsmodus wird neben der Notbetriebs-Solltrajektorie auch ein zur Notbetriebs-Solltrajektorie zugehöriger Spurverlauf einer vom Fahrzeug befahrenen Fahrspur ermittelt und dem Nebensteuergerät zur Speicherung zugeführt. Zudem ist vorgesehen, dass die Notbetriebs-Solltrajektorie und der zugehörige Spurverlauf in einem fahrzeugfesten Koordinatensystem des Hautsteuergerätes ermittelt werden. Im Notbetriebsmodus wird der Spurverlauf der vom Fahrzeug befahrenen Fahrspur in einem fahrzeugfesten Koordinatensystem des Nebensteuergerätes ermittelt und im Notbetriebsmodus wird basierend auf dem im Nebensteuergerät gespeicherten Spurverlauf der Fahrspur und dem vom Nebensteuergerät ermittelten Spurverlauf der Fahrspur eine Abweichung zwischen den Koordinatensystemen des Hauptsteuergerätes und des Nebensteuergerätes kompensiert.

Aus der WO 2020/075 477 A1 ist ein Fahrzeugsteuerungssystem für ein Fahrzeug bekannt, das zwei Steuergeräte umfasst, in denen Funktionen zum automatisierten Fahren implementiert sind. Dabei ist vorgesehen, dass das erste Steuergerät eine Solltrajektorie für das Fahrzeug plant und das zweite Steuergerät eine Notbetriebs-Solltrajektorie (Backup-Trajektorie) plant, gemäß der das Fahrzeug bei einem Ausfall des ersten Steuergeräts in der Fahrspur des Fahrzeugs angehalten werden soll.

Aus der US 2017/248 951 A1 ist ein Verfahren zur Steuerung eines Fahrzeugs bekannt, bei dem vorgesehen ist, dass Signale, die Aspekte des Fahrzeugs und der Fahrzeugumgebung repräsentieren, aus einer Mehrzahl von Quellen empfangen werden, dass für mindestens eines der Signale ein Vertrauensfaktor bestimmt wird und dass in Abhängigkeit des Vertrauensfaktors eine Umschaltung der Steuerung des Fahrzeugs zwischen verschiedenen Stufen eines autonomen Betriebs vorgenommen wird.

Der Erfindung liegt die Aufgabe zugrunde, ein Verfahren zum Betrieb eines Fahrzeuges im automatisierten Fahrbetrieb anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines für den automatisierten Fahrbetrieb eingerichteten Fahrzeuges sieht vor, dass das Fahrzeug in einem regulären Betriebsmodus des automatisierten Fahrbetriebs mittels eines Hauptsteuergerätes automatisiert zu einer Zielposition geführt wird, und in einem Notbetriebsmodus mittels eines Nebensteuergerätes automatisiert in eine sichere Halteposition überführt wird. Erfindungsgemäß wird mittels des Hauptsteuergerätes fortlaufend eine Funktionsbereitschaft des Nebensteuergerätes überprüft und in Abhängigkeit der überprüften Funktionsbereitschaft wird eine Entscheidung getroffen, ob eine Freigabe für den automatisierten Fahrbetrieb des Fahrzeugs erteilt oder entzogen werden soll, wobei der automatisierte Fahrbetrieb ausschließlich bei erfolgter Freigabe aktiviert und bei Entzug der Freigabe deaktiviert wird.

Durch Anwendung des Verfahrens kann mit vergleichsweise geringem technischem Aufwand eine maximal hohe Verfügbarkeit einer Rückfallpfadfunktion des Fahrzeuges, d. h. eine Verfügbarkeit des Notbetriebsmodus, erreicht werden. Somit wird eine Verfügbarkeit des automatisierten Fahrbetriebes nicht bzw. unmerklich eingeschränkt.

Für die Rückfallpfadfunktion sind Koppelnavigationsdaten und Kameraspurdaten erforderlich, so dass keine redundante Sensorik, insbesondere Umgebungssensorik, für den Notbetriebsmodus und den regulären Betriebsmodus benötigt wird.

Mittels des Verfahrens wird erlaubt, eine gewünschte Qualität bzw. Verfügbarkeit in Bezug auf den automatisierten Fahrbetrieb einzustellen. Der reguläre Betriebsmodus des automatisierten Fahrbetriebes kann also nur dann aktiviert werden, wenn die Rückfallpfadfunktion, also der Notbetriebsmodus zum Überführen des Fahrzeuges in die sichere Halteposition, verfügbar ist.

In einer Ausführung des Verfahrens wird zur Überprüfung der Funktionsbereitschaft des Nebensteuergerätes geprüft, ob Daten, die vom Nebensteuergerät zur Lokalisierung des Fahrzeuges bei der Führung des Fahrzeugs herangezogen werden, vorgegebene Qualitätsanforderungen erfüllen.

Dabei beziehen sich die Qualitätsanforderungen insbesondere auf eine Spurerfassung, d. h. auf eine Erfassung einer Spurmarkierung einer Fahrspur des Fahrzeuges, so dass das Fahrzeug in die sichere Haltefunktion überführt werden kann. Entsprechen die Daten nicht den vorgegebenen Qualitätsanforderungen, wird das Fahrzeug bei der Überführung in die sichere Halteposition stärker als üblich verzögert, so dass das Fahrzeug vergleichsweise kurzfristig, also schnell, in einen Stillstand versetzt wird. Dadurch kann weitestgehend vermieden werden, dass das Fahrzeug eine Gefahr für weitere Verkehrsteilnehmer in einer Umgebung des Fahrzeuges darstellt.

In einer Weiterbildung werden mittels des Hauptsteuergerätes Koppelnavigationsdaten und ermittelte Kameraspurdaten in Bezug auf die vorgegebenen Qualitätsanforderungen überprüft. Anhand der Kameraspurdaten wird eine Übereinstimmung einer erkannten Fahrspur mit einer realen Fahrspur ermittelt und dahingehend eine Wahrscheinlichkeit bestimmt, so dass es möglich ist, das Fahrzeug in die sichere Halteposition zu überführen. Dabei können bei der Ermittlung der Wahrscheinlichkeit in Bezug auf die Übereinstimmung, z. B. Merkmale wie eine Eindeutigkeit von Spurmerkmalen im Bild, eine Detektionshistorie und/oder eine Übereinstimmung mit einem Ergebnis eines unabhängigen Spurerkennungsalgorithmus, berücksichtigt werden.

Die Koppelnavigationsdaten sind Daten, die z. B. aus einem sogenannten Coupled Navigation System vorliegen. Mittels statistischer Verfahren werden Positionsdaten einer satellitengestützten Positionsbestimmungseinheit mit Inertial-Sensordaten des Fahrzeuges, beispielsweise Beschleunigungen, Drehraten, z. B. um eine Längs-, Quer- und/oder Hochachse des Fahrzeuges, und weiteren Fahrzustandsdaten wie Raddrehinformationen und Radwinkel, d. h. einem Lenkeinschlag einer Vorderachse und gegebenenfalls einer Hinterachse, zusammengeführt, um eine maximal genaue und verlässliche Lokalisierung des Fahrzeuges zu erreichen.

In einer weiteren Ausführung des Verfahrens wird in Abhängigkeit einer Erfüllung der vorgegebenen Qualitätsanforderungen über die Erteilung der Freigabe oder den Entzug der Freigabe entschieden. Insbesondere wird in Abhängigkeit der Kameraspurdaten und der Koppelnavigationsdaten die Verfügbarkeit der Rückfallpfadfunktion ermittelt und entschieden, ob ein automatisierter Fahrbetrieb des Fahrzeuges im regulären Betriebsmodus möglich ist.

Erfindungsgemäß wird über die Freigabe oder den Entzug der Freigabe zum automatisierten Fahrbetrieb anhand von Entscheidungskriterien entschieden, welche in Abhängigkeit einer Grenzgeschwindigkeit in Bezug auf eine momentane Fahrgeschwindigkeit des Fahrzeuges vorgegeben werden. Bei vergleichsweise geringer Fahrgeschwindigkeit des Fahrzeuges, also bei Unterschreiten der Grenzgeschwindigkeit wird die Freigabe zum automatisierten Fahrbetrieb erteilt, wenn die Koppelnavigationsdaten oder die Kameraspurdaten die vorgegebenen Qualitätsanforderungen erfüllend zur Verfügung stehen. D. h. also, dass der automatisierte Fahrbetrieb bei Unterschreiten der Grenzgeschwindigkeit freigegeben wird, wenn die Koppelnavigationsdaten oder die Kameraspurdaten die vorgegebenen Qualitätsanforderungen erfüllen.

In einer möglichen Weiterbildung wird der automatisierte Fahrbetrieb bei Überschreiten der Grenzgeschwindigkeit freigegeben, wenn sowohl die Koppelnavigationsdaten als auch die Kameraspurdaten die vorgegebenen Qualitätsanforderungen erfüllen.

Ausführungsbeispiele der Erfindung werden im Folgenden anhand einer Zeichnung näher erläutert.

Dabei zeigt die:

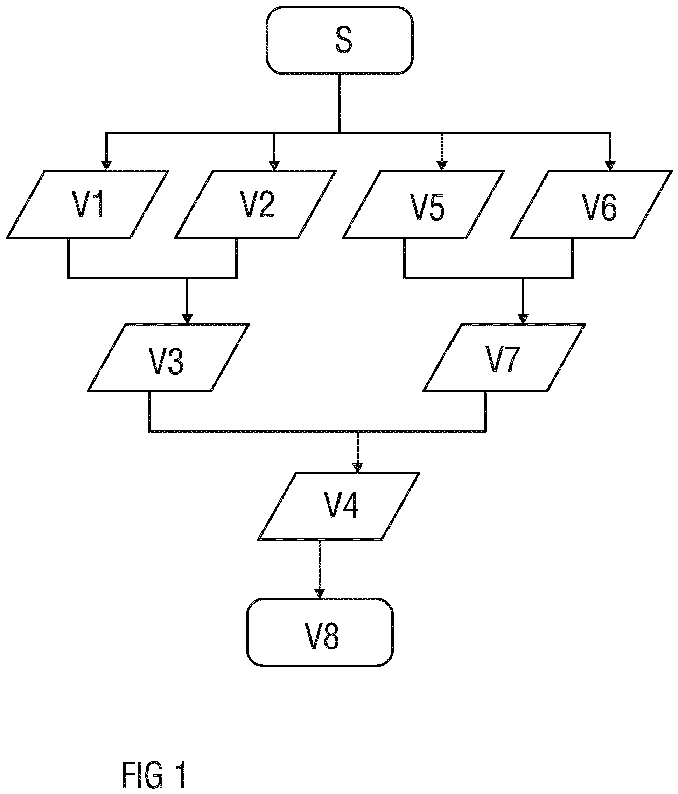

- Fig. 1: schematisch einen Ablauf eines Verfahrens zur Entscheidung einer Aktivierung eines automatisierten Fahrbetriebes.

Die einzige Figur zeigt einen Ablauf eines Verfahrens zur Entscheidung einer Aktivierung eines automatisierten Fahrbetriebes in einem nicht näher dargestellten Fahrzeug.

Ein fahrzeugseitiges Assistenzsystem zum automatisierten Fahrbetrieb, insbesondere zum hochautomatisierten Fahrbetrieb, ist mit einer Vielzahl von Informationsquellen verbunden, um das Fahrzeug vergleichsweise sicher in seiner Fahrspur zu regeln.

Bei diesen Informationsquellen handelt es sich um Sensoren, wie insbesondere Kameras, Stereokameras, lidarbasierte Sensoren, radarbasierte Sensoren, ultraschallbasierte Sensoren, Fernbereichsradarsensoren, Multimode-Radarsensoren, Rundumsicht-Systeme, digitale Karten, Inertialsensoren, Fahrzustandssensoren, satellitengestützte Positionsbestimmungseinheiten und Rückfahrkameras.

Das Assistenzsystem umfasst ein Hauptsteuergerät und ein Nebensteuergerät. Das Hauptsteuergerät ermittelt fortlaufend eine Solltrajektorie, entlang der das Fahrzeug in einem regulären Betriebsmodus des automatisierten Fahrbetriebes zu einer Zielposition geführt wird. Zudem wird mittels des Hauptsteuergerätes fortlaufend eine Notbetriebssolltrajektorie ermittelt, entlang der das Fahrzeug in einem Notbetriebsmodus des automatisierten Fahrbetrieb in eine sichere Halteposition überführt wird. Dabei wird die Notbetriebssolltrajektorie während des regulären Betriebsmodus ermittelt und in einem Nebensteuergerät, welches auch als Ersatzsteuergerät bezeichnet wird, gespeichert. Die Führung des Fahrzeugs zur Zielposition erfolgt dabei durch eine Trajektorienregelung mittels des Hauptsteuergeräts und die Führung des Fahrzeugs zur sicheren Halteposition erfolgt durch eine Trajektorienregelung mittels des Nebensteuergeräts.

Das Hauptsteuergerät sendet also dem Nebensteuergerät eine Fahrvorgabe, so dass das Nebensteuergerät bei Ausfall des Hauptsteuergerätes eine Fahraufgabe in Bezug auf das Fahrzeug übernimmt und dieses entsprechend der Fahrvorgabe, d. h. entsprechend der Notbetriebssolltrajektorie, regelt. Das Nebensteuergerät kann dabei ein Steuergerät einer Fahrdynamikregelung des Fahrzeuges sein.

Dem Nebensteuergerät stehen zur Ausführung der Fahrvorgabe lediglich eine Kamera mit einer Spurerkennung und Sensordaten zur Koppelnavigation, insbesondere Koppelnavigationsdaten, zur Verfügung. Im Folgenden wird ein Verfahren beschrieben, wie anhand von Kameraspurdaten und der Koppelnavigationsdaten eine vergleichsweise hoch verfügbare Rückfallpfadfunktion, also der Notbetriebsmodus, mit verhältnismäßig hoher Güte erreicht werden kann.

Im Fall, dass die Rückfallpfadfunktion nur verfügbar ist, wenn Kameraspurdaten und Koppelnavigationsdaten vorliegen, würde der automatisierte Fahrbetrieb in seiner Verfügbarkeit relativ stark eingeschränkt und laufend deaktiviert werden, da es fortlaufend zu Unterbrechungen in einer Erfassung der Kameraspurdaten und der Koppelnavigationsdaten kommen kann.

Die Rückfallpfadfunktion stellt eine Rückfalllösung im automatisierten Fahrbetrieb dar. Aus diesem Grund ist es nur möglich, den automatisierten Fahrbetrieb des Fahrzeuges zu aktivieren, wenn die Rückfallpfadfunktion, d. h. der Notbetriebsmodus, bereit steht und entsprechend verfügbar ist. Eine Bereitschaft der Rückfallpfadfunktion wird dem Hauptsteuergerät mittels einer Freigabe zum automatisierten Fahrbetrieb erteilt.

Bei veränderten Betriebsbedingungen kann die Rückfallpfadfunktion die Freigabe zum automatisierten Fahrbetrieb entziehen. Eine Bewertung der Verfügbarkeit der Rückfallpfadfunktion erfolgt im Hauptsteuergerät, obwohl die Rückfallpfadfunktion im Nebensteuergerät implementiert ist. Die Bewertung durch das Hauptsteuergerät ist dadurch möglich, da Signale zur Einschätzung einer Funktionsfähigkeit des Nebensteuergerätes und weiterer erforderlicher Komponenten auch dem Hauptsteuergerät vorliegen.

Die Rückfallpfadfunktion nutzt zur Lokalisierung des Fahrzeuges Koppelnavigationsdaten oder Kameraspurdaten. Ist der Notbetriebsmodus des Fahrzeuges aktiviert und es stehen dem Nebensteuergerät weder Koppelnavigationsdaten noch Kameraspurdaten zur Verfügung, wird das Fahrzeug vergleichsweise stark verzögert, um das Fahrzeug möglichst schnell in den Stillstand, insbesondere in die sichere Halteposition, zu versetzen.

Die Kamera des Fahrzeuges, insbesondere in Form einer Stereo Multi Purpose Camera, liefert fortlaufend erfasste Abstände einer Fahrzeugmittelachse zu einer linken und einer rechten Spurmarkierung, welche eine Fahrspur des Fahrzeuges begrenzen. Zudem werden anhand erfasster Kameraspurdaten Informationen wie eine erfasste Spurstruktur ermittelt. Die Spurstruktur beschreibt eine Struktur, die erkannt wurde, wie z. B. Spurmarkierungen der eigenen Fahrspur, der Nachbarfahrspur, eines Fahrbahnrandes oder einer erhabenen Fahrbahnbegrenzung, beispielsweise einer Leitplanke. Diese Spurstruktur wird als fiktive Spur kodiert dem Nebensteuergerät zur Verfügung gestellt.

Darüber hinaus stellt die Kamera mittels ihrer Kameraspurdaten Qualitätssignale, eine Weite der erfassten Fahrspur und einen Detektionsstatus, insbesondere in Bezug auf eine erfasste Fahrspur oder eine zeitlich extrapolierte Fahrspur, bereit.

Eine Führung des Fahrzeuges im automatisierten Fahrbetrieb, insbesondere im Notbetriebsmodus, kann anhand einer erfassten Spurmarkierung oder im Idealfall anhand beidseitig erfasster Spurmarkierungen erfolgen.

Eine Erfassung einer Fahrspur erfordert, dass entsprechende Strukturmerkmale vorliegen und in erfassten Umgebungsbedingungen anhand erfasster Bilddaten der Kamera identifiziert werden können. Zusätzlich zu fehlenden Spurmarkierungen auf einer Fahrbahn können Blendungen und/oder Sichtbehinderungen, z. B. Nebel, und/oder Verschmutzungen einer Kamerascheibe zu Beeinträchtigungen bei der Erfassung von Kameraspurdaten führen.

In Bezug auf die Kameraspurdaten sind Qualitätsanforderungen vorgegeben, wobei eine Qualitätsanforderung eine Wahrscheinlichkeit für eine Übereinstimmung der erfassten Kameraspurdaten mit einer realen Fahrspur darstellt. In die Ermittlung der Wahrscheinlichkeit können z. B. Merkmale, wie beispielsweise eine Eindeutigkeit von Spurmerkmalen in erfassten Bilddaten, eine Detektionshistorie oder eine Übereinstimmung mit einem Ergebnis eines weiteren unabhängigen Spurerkennungsalgorithmus herangezogen werden.

Ein Signal in Bezug auf die Qualitätsanforderungen ist eine Varianz zum momentan angezeigten seitlichen Abstand von einer Fahrzeugmittelachse zur Spurmarkierung in Quadratmetern. Ein weiteres Signal benennt eine Varianz eines momentan angezeigten Gierwinkels des Fahrzeuges, d. h. einer Fahrzeuglängsachse zur Spurmarkierungstangente in der Einheit Grad zum Quadrat. Dabei werden die Signale für jede Spurmarkierung einer linken und rechten Seite individuell ermittelt. Üblicherweise werden die Varianzen anhand von Ergebnissen eines Kalman-Filters abgeleitet.

Die Koppelnavigationsdaten sind Daten, die z. B. anhand eines Coupled Navigation Systems vorliegen. Mittels statistischer Verfahren, beispielsweise eines Kalman-Filters, werden Positionsdaten, z. B. Longitude, Latitude, v-North, v-East, einer satellitengestützten Positionsbestimmungseinheit mit Inertial-Sensordaten und weiteren Fahrzustandsdaten zusammengeführt, um eine maximal genaue Lokalisierung des Fahrzeuges zu erreichen.

Als Inertial-Sensordaten werden Beschleunigungen und Drehraten, beispielsweise um eine Längs-, Quer, und/oder Hochachse des Fahrzeuges, ermittelt. Als weitere Fahrzustandsdaten werden Raddrehinformationen und Radwinkel, insbesondere in Bezug auf einen Lenkeinschlag einer Vorder- und gegebenenfalls einer Hinterachse, ermittelt.

Die zur Fahrzeugregelung im aktivierten Notbetriebsmodus zur Verfügung zu stellenden Koppelnavigationsdaten, um diese für eine Trajektorienregelung, also für die Fahrvorgabe zu verwenden, können z. B. eine Fahrzeuglängs- und Quergeschwindigkeit oder eine Fahrzeugbewegung in Nord- und Ostrichtung, absolute oder relative Ortspunkte oder Winkel und Geschwindigkeit herangezogen werden.

Die Koppelnavigationsdaten sind am genauesten, wenn ausreichend viele Satelliten, insbesondere 10 Satelliten oder mehr, erfasst werden und Korrekturdaten vorliegen. Sind ausreichend viele Satelliten zur Positionsbestimmung erfassbar, wird dieser Umstand als Normal-Mode-Betrieb bezeichnet, ansonsten als Bridging-Mode.

Sind die Bedingungen zum Normal-Mode-Betrieb nicht erfüllt, degradieren die Signale mit der Zeit und umso stärker, desto weniger Satelliten vorhanden sind. Aufgrund physikalischer Umstände können beim Integrieren der Koppelnavigationsdaten und damit auch im Notbetriebsmodus kleinere Abweichungen auftreten, die mit der Zeit zu einer zunehmenden Differenz zu einer Sollposition des Fahrzeuges, insbesondere in seiner Fahrspur, führen.

Anhand der Parameter der Kamera und der satellitengestützten Positionsbestimmungseinheit, insbesondere der Kameraspurdaten und der Koppelnavigationsdaten, wird die Verfügbarkeit und Nichtverfügbarkeit der Rückfallpfadfunktion im Hauptsteuergerät als Rückfallpfadfunktion-Bereitschaftsbestimmungs-Modul entschieden.

Fährt das Fahrzeug mit einer momentanen Fahrgeschwindigkeit, die eine vorgegebene Grenzgeschwindigkeit unterschreitet, wird die Freigabe zum automatisierten Fahrbetrieb erteilt, wenn die vorliegenden Kameraspurdaten oder die vorliegenden Koppelnavigationsdaten vorgegebenen Qualitätsanforderungen entsprechen. In einer speziellen Parameterwahl kann auch nur die Freigabe bei Vorliegen der Kameraspurdaten oder der Koppelnavigationsdaten erteilt werden. Oberhalb der Grenzgeschwindigkeit ist es erforderlich, dass die Kameraspurdaten und die Koppelnavigationsdaten den vorgegebenen Qualitätsanforderungen entsprechen.

Da eine Situation zur Aktivierung der Rückfallpfadfunktion vergleichsweise selten auftritt und auf Erfahrungswerten zur Detektionsleistungsfähigkeit einer Kamera zur Spurerkennung sowie einer Genauigkeit und Verfügbarkeit von Koppelnavigationsdaten, insbesondere im Bridging-Modus, basiert, sind die Kriterien individuell auf Komponenten von Zulieferern des Fahrzeuges parametrierbar.

Eine Festlegung oder Vorgabe des Parameters Grenzgeschwindigkeit erfolgt derart, dass eine Güte eines Koppelns der Sensordaten eine vorgegebene Genauigkeit einhält. Diese vorgegebene Genauigkeit muss für eine definierte Zeitdauer eingehalten werden, woraus wiederum im Wesentlichen eine Abhängigkeit zur Fahrgeschwindigkeit, einem Anhalteweg, einer Verzögerung und eines Normal-Mode oder Bridging-Mode resultiert.

Die Grenzgeschwindigkeit von 40 km/h wird gewählt, wenn beispielsweise eine gewünschte Quergenauigkeit für alle Szenarien wie spurmittiges Fahren, Ausweichen, Kurvenfahrt und/oder vergleichsweise hohe Verzögerung, und 20 Sekunden im Bridging-Mode, beispielsweise ohne Satellitenempfang, von 0,2 Metern mit einem Sigma eingehalten wird. Diese Parameter können idealerweise im Hauptsteuergerät als sogenannte SCN-Parameter eingestellt werden.

Es kann auch auf einzelne Parameter zur Fahrspur verzichtet werden oder je nach Kameralösung um Parameter erweitert werden.

Stehen bei aktiver Rückfallpfadfunktion Kameraspurdaten und Koppelnavigationsdaten zur Verfügung, dann erfolgt die Trajektorienregelung anhand der Kameraspurdaten. Stehen keine Kameraspurdaten zur Verfügung wird die Trajektorienregelung auf Basis der Koppelnavigationsdaten durchgeführt.

In Bezug auf die Kameraspurdaten ändert sich im Wesentlichen eine absolute Genauigkeit eines Ergebnisses über die Zeit nicht, d. h. es entsteht keine Drift, und die Fahrspuren stellen auch für Menschen eine Orientierung zur Fahrzeugpositionierung dar.

In einem fehlerfreien System zum automatisierten Fahrbetrieb stehen die Sensoren als Informationsquellen zur Verfügung. Eine Spannungsversorgung, insbesondere über ein sogenanntes Backup-Bordnetz, und eine Busvernetzung der Sensoren ist derart ausgeführt, dass auch bei einem Ausfall eines Hauptbordnetzes diese Komponenten für die Rückfallpfadfunktion und insbesondere für das Nebensteuergerät verfügbar sind. Das Hauptsteuergerät ist mit weiteren Sensoren des Fahrzeuges an das Hauptbordnetz angebunden.

Im umgekehrten Fall kann das Hauptsteuergerät bei einem Ausfall des Backup-Bordnetzes die Fahrvorgabe ohne Kameraspurdaten und Koppelnavigationsdaten bis zu einer Fahrerübernahme in Bezug auf die Fahraufgabe erfüllen, da eine ausreichende Anzahl von Sensoren, insbesondere einer Umgebungssensorik, des Fahrzeuges vorhanden sind.

In einer Ausführung des Verfahrens wird das Fahrzeug bei aktiviertem Notbetriebsmodus ohne Kameraspurdaten und Koppelnavigationsdaten stärker verzögert und ein zuletzt erfasster Radwinkel einer Lenkung des Fahrzeuges beibehalten. Somit wird ein Kompromiss im Hinblick auf einen zukünftigen Fahrverlauf anhand einer aktuell vorliegenden Situation erreicht und eine Fahrereingriffserkennung anhand eines von einem Fahrer aufgebrachten Lenkmomentes bleibt erhalten.

Wie oben beschrieben, kann die Rückfallpfadfunktion in dem Nebensteuergerät implementiert werden, wobei das Nebensteuergerät ein Steuergerät einer Fahrdynamikregelung des Fahrzeuges oder ein anderes Steuergerät sein kann. Das Steuergerät der Fahrdynamikregelung eignet sich insbesondere als Nebensteuergerät, da eine derartige Lösung kostengünstig ist, keine zusätzlichen Komponenten erforderlich sind und eine Bremsfunktion bereits in das Steuergerät implementiert ist.

In einer Ausbildung des Rückfallpfadfunktion-Bereitschaftsbestimmungs-Moduls kann aufgrund von Informationen aus einer digitalen Karte, sofern in dieser hinterlegt ist, dass auf einem Streckenabschnitt Spurmarkierungen auf beiden Seiten der Fahrspur oder auf nur einer Seite fehlen, der automatisierte Fahrbetrieb, insbesondere der reguläre Betriebsmodus, für diesen Streckenabschnitt deaktiviert werden. Zudem ist aufgrund der digitalen Karte bei Fehlen einer Spurerkennung bekannt, welche Strecke das Fahrzeug zurücklegen muss, bis eine Spurerkennung erneut möglich ist, so dass diese Information durch das Rückfallpfadfunktion-Bereitschaftsbestimmungs-Modul berücksichtigt werden kann. Da derartige Informationen in dem Hauptsteuergerät vorliegen, ist eine Allokation der Rückfallpfad-Bereitschaftsbestimmung zu dem Hauptsteuergerät sinnvoll. Eine Funktionsfähigkeit der Kamera zur Spurerkennung bezüglich der Strecken kann auch von jedem Fahrzeug mit Kamera trainiert und gelernt werden und dies kann einem Dienst einer mit dem Fahrzeug datentechnisch gekoppelten Rechnereinheit zur Verfügung gestellt werden. Dadurch ist es möglich, dass die digitale Karte kontinuierlich aktualisiert wird.

Der in Figur 1 gezeigte Ablauf des Verfahrens gilt sowohl für die Freigabe des automatisierten Fahrbetriebes als auch für einen Entzug dieser Freigabe, wobei sich die Parameter der Bedingungen unterscheiden. Die Parameter sind dabei fest vorgegebene Werte.

Das Verfahren beginnt mit Start S und sieht vor, dass die Freigabe in Abhängigkeit von der Fahrgeschwindigkeit des Fahrzeuges erteilt wird. Bei einer momentanen Fahrgeschwindigkeit, die die Grenzgeschwindigkeit unterschreitet, wird eine Verfügbarkeit der Kameraspurdaten und der Koppelnavigationsdaten anders ermittelt als bei einer die Grenzgeschwindigkeit überschreitenden momentanen Fahrgeschwindigkeit. Dabei entspricht die Verfügbarkeit vorgegebener Qualitätsanforderungen, insbesondere Eigenschaften, erfasster Signale.

Bei einer die Grenzgeschwindigkeit unterschreitenden momentanen Fahrgeschwindigkeit wird in einem ersten Verfahrensschritt V1 geprüft, ob die Kameraspurdaten vorgegebene Qualitätsanforderungen erfüllen. Zudem wird in einem zweiten Verfahrensschritt V2 überprüft, ob die Koppelnavigationsdaten den vorgegebenen Qualitätsanforderungen entsprechen.

Wird in einem dritten Verfahrensschritt V3 ermittelt, dass entweder die erfassten Kameraspurdaten oder die Koppelnavigationsdaten die Qualitätsanforderungen erfüllen, wird in einem vierten Verfahrensschritt V4 die Freigabe zum automatisierten Fahrbetrieb des Fahrzeuges für eine Fahrgeschwindigkeit unterhalb der vorgegebenen Grenzgeschwindigkeit erteilt, da die Rückfallpfadfunktion für den automatisierten Fahrbetrieb bei einer momentanen Fahrgeschwindigkeit unterhalb der Grenzgeschwindigkeit verfügbar ist.

Da im Stau häufig Spurmarkierungen durch andere Fahrzeuge verdeckt sein können, ist es auch möglich, dass nur die Verfügbarkeit der Koppelnavigationsdaten unter Berücksichtigung der Qualitätsanforderungen abgefragt wird. Dies kann mit einem Parameter eingestellt werden.

Fährt das Fahrzeug mit einer momentanen Fahrgeschwindigkeit oberhalb der Grenzgeschwindigkeit von beispielsweise 40 km/h wird in einem fünften Verfahrensschritt V5 ermittelt, ob Kameraspurdaten vorhanden sind und die vorgegebenen Qualitätsanforderungen erfüllen. Die Grenzgeschwindigkeit kann 40 km/h betragen, wobei die Grenzgeschwindigkeit in Abhängigkeit von einer Genauigkeit der Koppelnavigationsdaten vergleichsweise stark nach unten oder nach oben abweichen kann.

In einem darauffolgenden sechsten Verfahrensschritt V6 wird überprüft, ob Koppelnavigationsdaten vorliegen und die vorgegebenen Qualitätsanforderungen erfüllen.

Anschließend wird in einem siebenten Verfahrensschritt V7 ermittelt, ob sowohl die Kameraspurdaten als auch die Koppelnavigationsdaten den vorgegebenen Qualitätsanforderungen entsprechen, so dass das Verfahren zu dem vierten Verfahrensschritt V4 springt und der automatisierte Fahrbetrieb für eine die vorgegebene Grenzgeschwindigkeit überschreitende Fahrgeschwindigkeit freigegeben wird.

In einem achten Verfahrensschritt V8 wird dann die Freigabe zum automatisierten Fahrbetrieb des Fahrzeuges erteilt oder entzogen, da die Bedingungen der Rückfallpfadfunktion erfüllt bzw. nicht erfüllt sind.

Ein analoges Vorgehen erfolgt für einen Entzug der Freigabe des automatisierten Fahrbetriebes.

Das Verfahren sieht also vor, dass in Abhängigkeit der momentanen Fahrgeschwindigkeit des Fahrzeuges der automatisierte Fahrbetrieb freigegeben oder beendet wird.

Insbesondere, wenn die momentane Fahrgeschwindigkeit die vorgegebene Grenzgeschwindigkeit überschreitet, werden die linke Spurmarkierung und die rechte Spurmarkierung unabhängig voneinander detektiert, so dass die Bedingungen für die linke und die rechte Spurmarkierung individuell geprüft werden. Dabei werden die Bedingungen in Bezug auf die Kameraspurdaten überprüft.

Eine Teilfreigabe für eine Spurmarkierung erfolgt, wenn bestimmte vorgegebene Parameter, insbesondere die oben genannten Qualitätssignale, erfüllt sind. Dabei wird die Freigabe erteilt, wenn die Qualitätssignale in Bezug auf ihre Bedingungen, beispielsweise auch nur für eine Seite, erfüllt sind.

Bestimmte Qualitätssignale stellen ein Maß für bestimmte Eigenschaften der Kameraspurdaten dar. Insbesondere werden, wie oben beschrieben, Strukturmerkmale ermittelt, wobei Strukturmerkmale für eine Struktur stehen, die erkannt wurde, wie z. B. die Spurmarkierung der eigenen Fahrspur auf einer angegebenen Seite oder abgeleitet von der anderen Seite oder der Nachbarspur oder einem Fahrbahnrand oder einer erhabenen Fahrbahnbegrenzung, z. B. einer Leitplanke. Beispielsweise kann die rechte Spurmarkierung von der linken abgeleitet werden.

Ein Wert der Variablen steigt mit einem Abstand der Spurmarkierung zum Fahrzeug und damit sinkt eine Qualität der Information. Wenn die Spurmarkierung der eigenen Fahrspur auf der entsprechenden Seite als erkannt signalisiert wird, kann die Freigabe zum automatisierten Fahrbetrieb erteilt werden. Der Entzug der Freigabe erfolgt z. B., wenn nur noch die Nachbarspur oder eine höhere Fahrbahnbegrenzung erkannt wird.

Ein Qualitätssignal steht für einen Status der Spurerkennung und unterscheidet zwischen keiner Erkennung, einer aktuellen Erkennung, d. h. einer Detektion der Fahrzeugspur und einer Prädiktion, d. h. ein Ergebnis einer letzten Spurerkennung benennt eine Spurinformation. Wenn der Wert dieser Variablen Detektion anzeigt, kann die Freigabe des automatisierten Fahrbetriebes erteilt werden. Die Freigabe wird entzogen, wenn keine Fahrspur erkannt wird.

Ein weiteres Qualitätssignal steht für eine Weite der erfassten Fahrspur und somit der erfassten Spurmarkierungen und benennt eine Entfernung vor dem Fahrzeug bis zu der die Spurmarkierungen detektiert wurde. Je größer dieser Wert ist, desto besser ist die Erkennung und damit eine Verlässlichkeit und Genauigkeit des Ergebnisses. Beträgt die Weite beispielsweise mehr als 50 Meter kann die Freigabe des automatisierten Fahrbetriebes erteilt werden. Die Freigabe wird entzogen und entsprechend eine Übernahmeaufforderung ausgegeben, wenn der Wert unter 10 Meter liegt.

Insbesondere erfolgt der Entzug der Freigabe, wenn eines der Qualitätssignale für eine oder beide die Fahrspur des Fahrzeuges begrenzende/-n Spurmarkierung/-en für eine vorgegebene Zeitdauer von beispielsweise 7 Sekunden oder eine vorgegebene Entfernung von beispielsweise 200 Meter nicht erfüllt ist.

Eine Verzögerung des Entzuges der Freigabe durch die vorgegebene Zeitdauer von z. B. 7 Sekunden oder die vorgegebene Entfernung als streckenbezogene Verzögerung ist dem Sachverhalt geschuldet, dass in der Regel nach einer vergleichsweise kurzen Unterbrechung die Kameraspurdaten und/oder die Koppelnavigationsdaten wieder erfasst werden. Das Beenden des automatisierten Fahrbetriebes bis zur Übernahme der Fahraufgabe durch den Fahrer kann unter Umständen länger dauern.

Die Bedingungen zur Freigabe oder zum Entzug der Freigabe für den automatisierten Fahrbetrieb des Fahrzeuges in Bezug auf die Koppelnavigationsdaten, wenn die momentane Fahrgeschwindigkeit des Fahrzeuges die vorgegebene Grenzgeschwindigkeit überschreitet, entsprechen im Wesentlichen den oben genannten Bedingungen, wenn die Grenzgeschwindigkeit überschritten ist.

Insbesondere wird die Freigabe erteilt, wenn die eigene Fahrspur anhand der Spurmarkierung auf der entsprechenden Seite detektiert wird.

Alle genannten Werte der Variablen und Parameter sind beispielhaft gewählt und können an eine vorhandene Sensorik angepasst werden.

In Bezug auf die Koppelnavigationsdaten wird die Freigabe erteilt, wenn ein Qualitätssignal einen vorgegebenen Zustand, insbesondere den oben genannten Normal-Mode, anzeigt. Dieser Zustand liegt vor, wenn ausreichend viele Satelliten, insbesondere mehr als 10 Satelliten, erfasst werden und Korrekturdaten vorliegen. Werden weniger Satelliten erfasst, wird dieser Zustand als Bridging-Mode bezeichnet, wie oben beschrieben.

Die Freigabe wird entzogen, wenn der Zustand Normal-Mode für eine längere Zeitdauer, z. B. für 15 Sekunden, nicht angezeigt wird. Ein Parameterwert für diese Zeitdauer kann z. B. anhand einer Koppelgenauigkeit nach 3 Sekunden Bridging-Mode und dann anhand des Ergebnisses einer geregelten aktiven Rückfallpfadfunktion abgeleitet werden. Mittels dieses Parameterwertes soll die geforderte Koppelgenauigkeit in Längs- und Querrichtung gerade noch erreicht werden.

Fährt das Fahrzeug mit einer momentanen Fahrgeschwindigkeit, die die vorgegebene Grenzgeschwindigkeit unterschreitet, liegen die gleichen Bedingungen wie bei Überschreitung der Grenzgeschwindigkeit vor, wobei lediglich die Zeitparameter verschieden sind.

Bei auftretenden Fehlerfällen in Bezug auf die Kameraspurdaten und/oder die Koppelnavigationsdaten wird die Freigabe entzogen oder nicht mehr erteilt.

## Patentansprüche

1. Verfahren zum Betrieb eines für einen automatisierten Fahrbetrieb eingerichteten Fahrzeugs, wobei das Fahrzeug in einem regulären Betriebsmodus des automatisierten Fahrbetriebs mittels eines Hauptsteuergerätes automatisiert zu einer Zielposition geführt wird und in einem Notbetriebsmodus des automatisierten Fahrbetriebs mittels eines Nebensteuergeräts automatisiert in eine sichere Halteposition überführt wird, wobei
- mittels des Hauptsteuergerätes fortlaufend eine Funktionsbereitschaft des Nebensteuergerätes überprüft wird,
- in Abhängigkeit der überprüften Funktionsbereitschaft eine Entscheidung getroffen wird, ob eine Freigabe für den automatisierten Fahrbetrieb erteilt oder entzogen werden soll, **dadurch gekennzeichnet, dass** die Entscheidung auf Entscheidungskriterien beruht, die in Abhängigkeit einer Grenzgeschwindigkeit in Bezug auf eine momentane Fahrgeschwindigkeit des Fahrzeuges vorgegeben werden, und
- der automatisierte Fahrbetrieb ausschließlich bei erfolgter Freigabe aktiviert wird und bei Entzug der Freigabe deaktiviert wird.

2. Verfahren nach Anspruch 1,
**dadurch gekennzeichnet, dass** zur Überprüfung der Funktionsbereitschaft des Nebensteuergerätes geprüft wird, ob Daten, die vom Nebensteuergerät bei der Führung des Fahrzeugs zur Lokalisierung des Fahrzeuges herangezogen werden, vorgegebene Qualitätsanforderungen erfüllen.

3. Verfahren nach Anspruch 2,
**dadurch gekennzeichnet, dass** mittels des Hauptsteuergerätes Koppelnavigationsdaten und ermittelte Kameraspurdaten in Bezug auf die vorgegebenen Qualitätsanforderungen überprüft werden.

4. Verfahren nach Anspruch 2 oder 3,
**dadurch gekennzeichnet, dass** in Abhängigkeit einer Erfüllung der vorgegebenen Qualitätsanforderungen über die Erteilung der Freigabe oder den Entzug der Freigabe entschieden wird.

5. Verfahren nach Anspruch 3 oder 4,
**dadurch gekennzeichnet, dass** der reguläre Betriebsmodus bei Unterschreiten der Grenzgeschwindigkeit freigegeben wird, wenn die Koppelnavigationsdaten oder die Kameraspurdaten die vorgegebenen Qualitätsanforderungen erfüllen.

6. Verfahren nach einem der Ansprüche 3 bis 5,
**dadurch gekennzeichnet, dass** der reguläre Betriebsmodus bei Überschreiten der Grenzgeschwindigkeit freigegeben wird, wenn sowohl die Koppelnavigationsdaten als auch die Kameraspurdaten die vorgegebenen Qualitätsanforderungen erfüllen.

## Claims

1. Method for operating a vehicle designed for automated driving operation, the vehicle, in a regular operating mode of the automated driving operation, being guided in an automated manner to a target position by means of a main control unit and, in an emergency operating mode of the automated driving operation, transferred in an automated manner to a safe stopping position by means of a secondary control unit,
- the main control unit being used to continuously verify the functional readiness of the secondary control unit,
- a decision being made, depending on the verified functional readiness, as to whether approval for automated driving operation should be granted or withdrawn, **characterized in that** the decision is based on decision criteria which are specified depending on a limit speed in relation to a current driving speed of the vehicle, and
- the automated driving operation being activated only when approval is granted, and deactivated when approval is withdrawn.

2. Method according to claim 1,
**characterized in that** in order to verify the functional readiness of the secondary control unit, it is verified whether data used by the secondary control unit to localize the vehicle when guiding the vehicle meet specified quality requirements.

3. Method according to claim 2,
**characterized in that** dead-reckoning data and determined camera track data are verified in relation to the specified quality requirements by means of the main control unit.

4. Method according to claim 2 or claim 3,
**characterized in that** the decision as to whether to grant approval or withdraw approval is made depending on whether the specified quality requirements are met.

5. Method according to claim 3 or claim 4,
**characterized in that** the regular operating mode is enabled in the case of the limit speed not being met if the dead-reckoning data or the camera track data meet the specified quality requirements.

6. Method according to any of claims 3 to 5,
**characterized in that** the regular operating mode is enabled in the case of the speed limit being exceeded if both the dead-reckoning data and the camera track data meet the specified quality requirements.

## Revendications

1. Procédé permettant de faire fonctionner un véhicule configuré pour un fonctionnement de conduite automatisé, dans lequel le véhicule est guidé de manière automatisée vers une position cible dans un mode de fonctionnement régulier du fonctionnement de conduite automatisé au moyen d'un appareil de commande principal et est amené de manière automatisée dans une position d'arrêt sûre dans un mode de fonctionnement d'urgence du fonctionnement de conduite automatisé au moyen d'un appareil de commande auxiliaire, dans lequel
- une disponibilité fonctionnelle de l'appareil de commande auxiliaire est vérifiée en permanence au moyen de l'appareil de commande principal,
- en fonction de la disponibilité fonctionnelle vérifiée, une décision est prise quant à l'octroi ou au retrait d'une autorisation pour le fonctionnement de conduite automatisé, **caractérisé en ce que** la décision repose sur des critères de décision qui sont prédéfinis en fonction d'une vitesse limite par rapport à une vitesse de conduite momentanée du véhicule, et
- le fonctionnement de conduite automatisé est activé exclusivement en cas de réussite de l'autorisation et est désactivé en cas de retrait de l'autorisation.

2. Procédé selon la revendication 1,
**caractérisé en ce que,** pour la vérification de la disponibilité fonctionnelle de l'appareil de commande auxiliaire, on vérifie si des données qui sont utilisées par l'appareil de commande auxiliaire pour la localisation du véhicule lors du guidage du véhicule répondent aux exigences de qualité prédéfinies.

3. Procédé selon la revendication 2,
**caractérisé en ce que,** au moyen de l'appareil de commande principal, des données de navigation à l'estime et des données de voie de caméra déterminées sont vérifiées par rapport aux exigences de qualité prédéfinies.

4. Procédé selon la revendication 2 ou 3,
**caractérisé en ce que** l'octroi de l'autorisation ou du retrait de l'autorisation est décidé en fonction d'une réponse aux exigences de qualité prédéfinies.

5. Procédé selon la revendication 3 ou 4,
**caractérisé en ce que** le mode de fonctionnement régulier est autorisé lorsque la vitesse limite n'est pas atteinte si les données de navigation à l'estime ou les données de voie de caméra répondent aux exigences de qualité prédéfinies.

6. Procédé selon l'une des revendications 3 à 5,
**caractérisé en ce que** le mode de fonctionnement régulier est autorisé lorsque la vitesse limite est dépassée tant que les données de navigation à l'estime ainsi que les données de voie de caméra répondent aux exigences de qualité prédéfinies.
